# EUROPEAN PATENT APPLICATION

(11) **EP 1 708 517 A1**
(43) Date of publication of application: **04.10.2006**
(21) Application number: 05007152.1
(22) Date of filing: 01.04.2005
(51) Int. Cl.: H04N 17/04, G01R 1/04

(54) **Method for transmitting test data in an electronic device equipped with an electronic card reader, electronic device comprising an electronic card reader and an adapter for testing electronic devices equipped with an electronic card reader**

(71) Applicant: ADVANCED DIGITAL BROADCAST S.A., 1218 Geneva (CH)
(72) Inventor: Strabrowski, Marcin,, 65-001 Zielona Gora (PL)
(74) Representative: Szykula, Miroslaw

(57) **Abstract**

The object of the present invention is a method of transmitting test data in an electronic device equipped with an electronic card reader, in which for test data transmission an adapter is used, is characterized in that for the test data transmission purposes an adapter (202) equipped with C1-C8 contacts according ISO 7816-2 is used, and the adapter (202) is inserted into device's electronic card reader (170) and via the C4 contact or via the C8 contact or both C4 and C8 contacts of the reader (170) there are transmitted the test data between the electronic device equipped with an electronic card reader (170) and the external device and while testing there is a simultaneous communication between the electronic device and the electronic card (204) via the adapter (202).

Moreover the additional objects of the invention are an electronic device equipped with an electronic card reader and an adapter for testing of the devices equipped with an electronic card reader.

## Description

The object of the invention is a method for transmitting test data in an electronic device equipped with an electronic card reader, electronic device comprising an electronic card reader and an adapter for testing electronic devices equipped with an electronic card reader.

From an European patent application no. EP 1367821, entitled "Interconnecting television related apparatuses", there is a solution known, where for transmitting test data, among other signals, a SCART (Syndicat des Constructeurs d'Appareils Radiorecepteurs et Televiseurs) connector is used.

The SCART connector is also known under the name of Euroconnector and is described by the CENELEC EN 50 049-1:1989 and IEC 933-1 standards. The SCART connector allows for transmission of audio, video and control signals between for example a video recorder and a television set.

According to the 821' publication, two reserved pins 10 and 12 of this connector are used as TX and RX transmission lines of serial communication link according to the RS232 standard, which is commonly used in electronic devices.

According to the 821' publication there is no simultaneous use of AudioNideo transmission and serial communication RS232. The simultaneous use would cause a decrease of the quality and parameters of the Audio/Video signals.

From an international patent application no. WO04010156A1, entitled "Method and test adapter for testing an appliance having a smart card reader", there is a solution known, where an adapter is used, which is placed in the electronic card reader of the digital television decoder in order to service it or during factory functional test.

The adapter is connected to a personal computer, which is testing the device. The adapter comprises a connector for RS232 serial transmission and has a built-in interface for conversion of the signals standards from ISO 7816-3 to RS232. According to this invention there is no simultaneous use of, for example conditional access function available via the electronic card and the serial communication link allowing for testing of the device.

Pins C6 and C7 of the card reader are used for test data transmission, which forces the use of either serial transmission of test data or transmission of data from/to the electronic card. While using the adapter according to the 156' publication, it is not possible to test the device while using the electronic card.

Due to the miniaturization of the electronic devices, their designers often search for solutions, thanks to which they can reduce the number of connectors placed often on the back panels of the devices casings.

Miniaturization of the connectors and use of more advanced systems, for example of smaller size or greater bandwidth, for example optical audio transmission, requires additional cost of the device and change of the architecture of receivers of such signals.

In digital television decoders, the RS232 serial transmission connectors are often used, which serve for testing purposes and for programming of the decoders. The use of transmission of this type is cost-effective but requires additional, large size connector, which means additional cost and increases the need for space in the back panel of the device casing.

Taking the current state of the art into account, there is a need for a solution, which would eliminate the external RS232 connector, allow for cost reduction and for testing of the devices without decreasing the audio/video signal quality (821') or the necessity to remove the electronic card from the card reader of the electronic device being tested (156').

The solution according to the invention presents a new method for testing and configuring of electronic devices, wherein instead of typical serial communication connector, a modified software of the electronic card (Smart Card) reader is used and an adapter allowing for simultaneous operating of the electronic card and the serial transmission of test signals.

The method for transmitting test data in an electronic device equipped with an electronic card reader according to the present invention, in which for test data transmission an adapter is used, is characterized in that for the test data transmission purposes an adapter equipped with (C1-C8) contacts is used, and the adapter is inserted into device's electronic card reader and via the (C4) contact or via the (C8) contact or both (C4) and (C8) contacts of the reader there are transmitted simultaneously the test data between the electronic device equipped with an electronic card reader and the external device and while testing there is a simultaneous communication between the electronic device and the electronic card via the adapter.

According to the invention the test data are transmitted serially according to the I2C or RS232 standard.

According to the method of the present invention, during the test data transmission, in the adapter there is a voltage levels conversion made with the use of its voltage levels converter, in which there are also used the (C1) and (C5) contacts of the coupling of the adapter.

Favorably in the method of the present invention the electronic card in inserted in the adapter or an external electronic card reader is connected to the adapter into which the electronic card is inserted.

According to the invention the transmitted test data are sent bidirectionally between the electronic device and a service terminal via the adapter.

Favorably according to the invention the electronic device is programmed with the use of the test data.

It is also advantageous that there is a software update sent in the transmitted test data.

The electronic device equipped with an electronic card reader according to the invention is characterized in that it comprises a test data transmission management block controlling data transmission and reception via the electronic card reader and comprises a device's test data management block, allowing testing and programming of the device via the (C4) contact or the (C8) contact or both (C4) and (C8) contacts of the electronic card reader.

The electronic device of the invention is favorably connected with the service terminal via an adapter, which is inserted in the device's electronic card reader and via which the programming of the device and/or transmission of the test data is executed between the electronic device and the service terminal.

It is favorable, when in the device according to the invention the adapter, to which an electronic card is connected or inserted into the adapter, comprises a voltage levels converter circuit and a serial communication connector to which a service terminal is connected.

The adapter for testing devices equipped with an electronic card reader, according to the invention is characterized in that it comprises two contacts zones of the electronic cards, wherein the first of the zones, forming the first coupling, is used by the electronic card reader of the adapter and the second contacts zone, forming the second coupling, is used by the part of the adapter, which is inserted into the electronic card reader of the device and the (C1, C2, C3, C5, C6, C7) contacts of the zones are directly connected.

Moreover the adapter according to the present invention comprises voltage levels converter, to which signals from the (C4) contact or the (C8) contact or both (C4) and (C8) contacts of the second electronic card contacts zone are connected, that changes the voltage levels of the data reception line and the data transmission line in the serial transmission.

Additionally a serial transmission connector is a part of the adapter, to the pins of which data reception and data transmission lines are connected.

Favorably, according to the invention, the power supply of the voltage levels converter is connected via the electronic card power supply contact or supplied to the adapter from an external source.

It is also of advantage that the part of the adapter, inserted into the electronic card reader, is a printed circuit board the dimensions of which equal the dimensions of an electronic card.

The method for transmission of test data finds its use in electronic devices, which require transmission of test data to external devices and are equipped with and electronic card reader.

Digital television decoders, known from the prior art, use the RS232 serial communication connector for service purposes. The decoder is via one link, for example SCART, connected with a television set and via the second link, for example RS232, with the service terminal.

For the access rights verification, in electronic devices there are often electronic cards used, which allow for descrambling of the received Audio/Video data. Additionally the electronic cards may be used to verify access rights to other services such as electronic banking.

The solution according to the invention allows for not including a separate RS232 connector in casing of the television decoder as an example of an electronic device.

In order to do that, the contacts of an electronic card reader are used for the transmission of test data not interfering with tasks of the card inserted in the reader. Such solution preserves all the farctions of the decoder at the same time allows for the miniaturization by limiting the space required for connectors allowing communication with the decoder.

Moreover, according to the method of the invention, there is possible simultaneous transmission of test data for example via RS232 and electronic card data.

In this way, the operation of television decoder, which requires electronic card for its proper work, is not disturbed.

Additionally the use of the solution according to the invention, instead of the solution with the SCART connector, allows for not interfering with the Audio/Video signals.

In case when the SCART connector is used, the quality of the Audio/Video signal will decrease because of the interferences. Such interferences can be minimized with the use of special filters, however it increases the cost of the solution and decreases the data transmission speed, which can be obtained.

Additionally, using other serial communication protocols, for example 12C, it is possible, in the solution according to the present invention, to achieve higher transfer rates.

The solution according to the invention is characterized in that reserved contacts of the electronic card contacts zone are used for transmission of test signals.

The international standard, describing electronic cards and procedures of their operation is the ISO/IEC 7816-3:1997(E). The standard is used for example in pay television systems, which use digital television decoders (set-top box) equipped with at least one electronic card reader and at least one electronic card, which allows for reception and descrambling of television data. The electronic cards contain, in internal memory, data, which allow descrambling of the received television signals.

The object of the invention is presented in exemplary embodiments in the drawing, the figures of which show:
- Fig. 1 - an example of a device using the method according to the invention;
- Fig. 2 - a diagram of connections between elements of the system;
- Fig. 3 - a view of the electronic card;
- Fig. 4 - an electronic card with marked contacts, used for test data transmission;
- Fig. 5 - detailed diagram of the adapter.

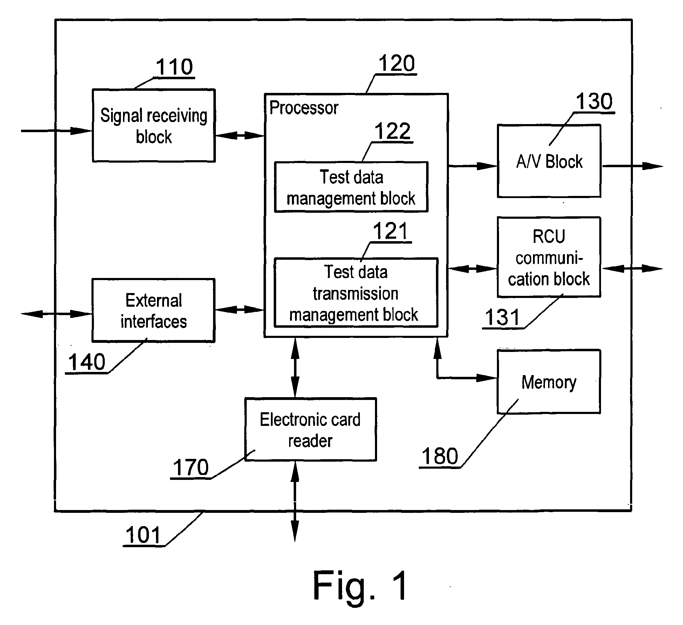

In Fig.1 a block diagram of a digital television decoder 101 is shown as an electronic device equipped with an electronic card reader in an exemplary embodiment allowing for better understanding of the inventions. It is a simplified version, comprising only modules required for presentation of the invention.

The digital television decoder 101 comprises a processor 120, which manages the device's work. The processor 120 comprises device's test data management block 122, allowing for communication with the device via the electronic card reader 170.

Additionally, according to the invention, the processor comprises an internal transmission management block 121 via the electronic card reader 170 controlling the transmission and reception of data, for example transmission and reception of service signals or software update of the device.

In another embodiment the 121 and 122 blocks may constitute separate modules, external to the processor 120. To the processor 120, signal from the signal receiving block 110 is passed. Additionally the processor 120 may bidirectionally exchange data via the external interfaces 140, for example with a modem. The digital television decoder 101 also comprises memory 180, usually several kinds, which are bidirectionally connected with the processor 120. A/V block 130 and the RCU communication blocks 131 allow for transmission of output Audio/Video signal and communication with the external control devices (for example remote control unit) respectively.

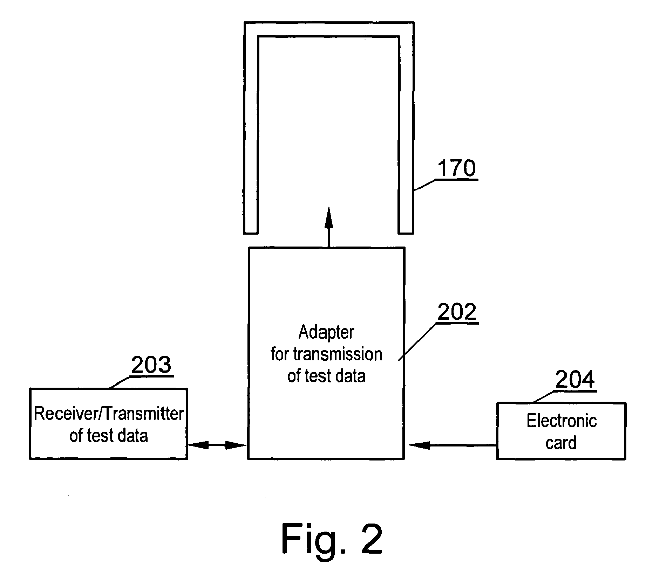

In Fig. 2 an example of a system using the solutions according to the invention together with an adapter 202 for simultaneous transmission of electronic card 204 data and transmission of test data.

A person servicing the electronic device according to the invention uses an adapter 202, thanks to which it is possible to simultaneously execute testing of the electronic device or updating of its software and communication of the electronic device with a card required for device's proper work, for example, electronic conditional access card (CA).

The electronic device according to the present invention comprises an electronic card reader 170. The adapter 202 for transmission of test data is placed in the electronic card reader 170 of the electronic device. The electronic card 204 is placed in the adapter 202, from which there are output signals for serial transmission of test data, which are connected to the receiver/transmitter of the test signals 203, for example to a service terminal. The adapter 202 allows bidirectional transmission of data between the electronic device and the service terminal as well as between the electronic device and the electronic card 204.

When using the presented method, an electronic card 204 reader 201 is enough for transmission, for example according to the RS232 standard, of test data or software update. Thanks to that the RS232 connector can be omitted in the casing of the device and therefore its external dimensions can be decreased.

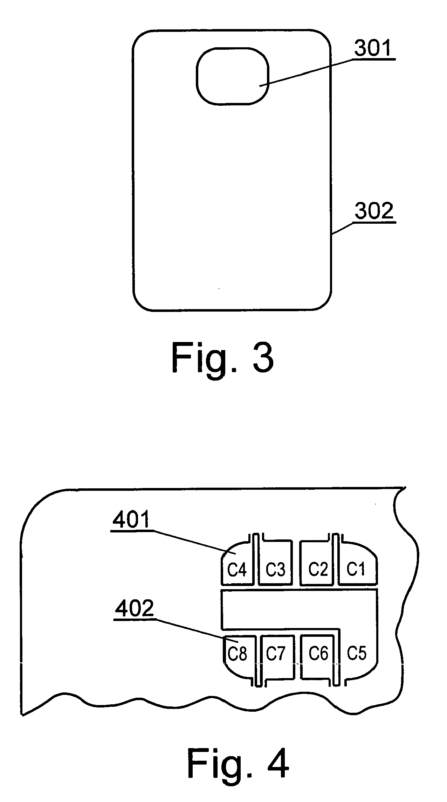

Fig.3 and Fig.4 present an electronic card 302, which according to the ISO 7816 standard has a contacts zone 301, which is a connector with eight flat contacts marked as C1 to C8. The C1 is connected to the power supply VCC, the C2 contact is connected to the reset signal RST, C3 is a clock signal CLK, the C4 and C8 contacts are reserved according to the ISO 7816 specification, the C5 contact is ground GND, C6 is assigned to the voltage used during programming VPP, the C7 contact is data input and output I/O.

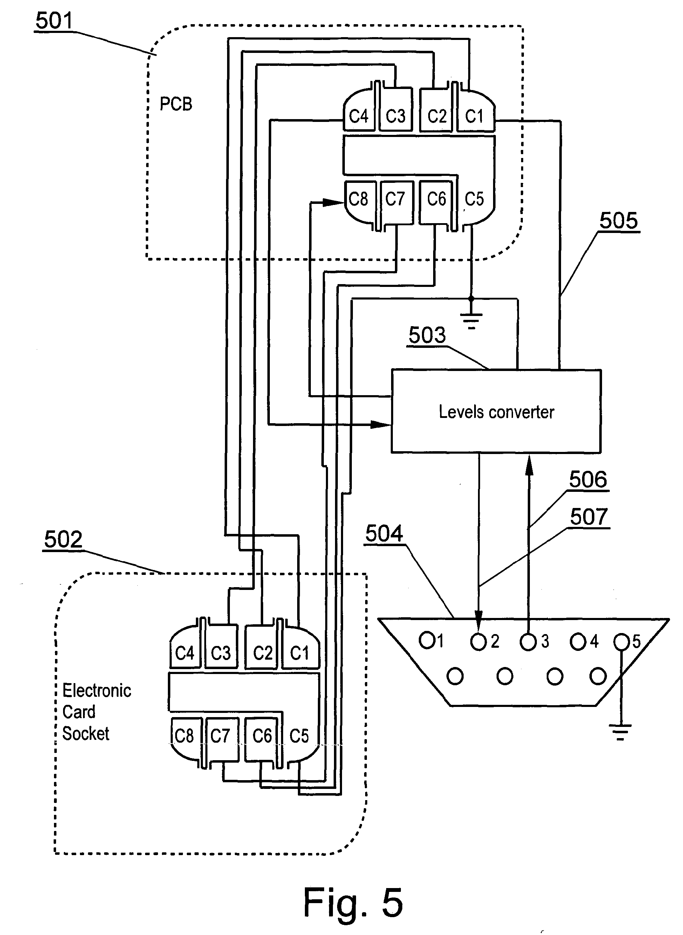

Fig. 4 presents the alignment of contacts zone of the electronic card. According to the present invention the serial data communication is executed by means of the GND, VCC, C4 401 and/or C8, 402 contacts. GND and VCC are used by the levels converter presented in Fig. 5. Thanks to that arrangement, the electronic card 302, inserted into the adapter 202, works in a standard way during the testing.

Fig. 5 presents details of the adapter 202 shown in Fig. 2 according to the invention. The adapter 202 comprises two contacts zones compatible with the ISO 7816 standard.

The first contacts zone, forming the first coupling, that is the electronic card socket 502, is used by the electronic card 204 reader of the adapter 202, and second contacts zone, forming the second coupling 501, is used by the part of the adapter 202, which is placed in the electronic card reader 170 of the electronic device, for example a digital television decoder 101.

The contacts C1, C2, C3, C5, C6 and C7 of these zones are directly connected.

Furthermore the adapter 202 comprises a voltage levels converter 503 (for example MAX232 circuit), changing the levels of voltage of the data reception 506 line RX and data transmission 507 line TX from the TTL levels to RS232 (in case of a different serial communication interface, the converter shall be compatible with the chosen interface).

The adapter 202 has the connector 504 of the RS232 type. The power supply 505 of the levels converter 503 may be connected via the contact of the electronic card 204 (power supply from the electronic device in which the adapter 202 will be placed) or connected to the adapter 202 from an external power source.

The part of the adapter 202 placed in the electronic card reader 170 of the electronic device may have the form of a printed circuit board (PCB), which will have the physical dimensions of an electronic card 204. The remaining modules of the adapter 202 will be situated outside the electronic device.

In another embodiment of the adapter 202, the test signals may be transmitted with the use of a single line, C4 or C8, however in such a case it will be a unidirectional transmission of the half-duplex type.

## Claims

1. The method for transmitting test data in an electronic device equipped with an electronic card reader, in which for test data transmission an adapter is used, **characterized in that** for the test data transmission purposes an adapter (202) equipped with (C1-C8) contacts is used, and the adapter (202) is inserted into device's electronic card reader (170) and via the (C4) contact or via the (C8) contact or both (C4) and (C8) contacts of the reader (170) there are transmitted the test data between the electronic device equipped with an electronic card reader (170) and the external device and while testing there is a simultaneous communication between the electronic device and the electronic card (204) via the adapter (202).

2. The method according to claim 1, **characterized in that** the test data are transmitted serially according to the I2C or RS232 standard.

3. The method according to claim 1, **characterized in that** during the test data transmission, in the adapter (202) there is a voltage levels conversion made with the use of its voltage levels converter (503), in which there are also used the (C1) and (C5) contacts of the coupling (501) of the adapter (202).

4. The method according to claim 1, **characterized in that** the electronic card in inserted in the adapter (202) or an external electronic card reader is connected to the adapter (202) into which the electronic card (204) is inserted.

5. The method according to claim 1, **characterized in that** the transmitted test data are sent bidirectionally between the electronic device and a service terminal via the adapter (202).

6. The method according to claim 1, **characterized in that** the electronic device is programmed with the use of the test data.

7. The method according to claim 1, **characterized in that** there is a software update sent in the transmitted test data.

8. Electronic device equipped with an electronic card reader is **characterized in that** it comprises a test data transmission management block (121) controlling data transmission and reception via the electronic card reader (170) and comprises a device's test data management block (122), allowing testing and programming of the device via the (C4) contact or the (C8) contact or both (C4) and (C8) contacts of the electronic card reader.

9. The device according to claim 8, **characterized in that** it is connected with a service terminal via an adapter (202), which is inserted in the device's electronic card reader (170) and via which the programming of the device and/or transmission of the test data is executed between the electronic device and the service terminal.

10. The device according to claim 9, **characterized in that** the adapter (202), to which an electronic card (204) is connected or inserted into the adapter, comprises a voltage levels converter (503) circuit and a serial communication connector to which a service terminal is connected.

11. Adapter for testing devices equipped with an electronic card reader, **characterized in that** it comprises two contacts zones of the electronic cards (204), wherein the first of the zones, forming the first coupling (502), is used by the electronic card (204) reader of the adapter (202) and the second contacts zone, forming the second coupling (501), is used by the part of the adapter (202), which is inserted into the electronic card reader (170) of the device and the (C1, C2, C3, C5, C6, C7) contacts of the zones are directly connected and the adapter (202) also comprises voltage levels converter (503), to which signals from the (C4) contact or the (C8) contact or both (C4) and (C8) contacts of the second electronic card (204) contacts zone are connected, that changes the voltage levels of the data reception line and the data transmission line in the serial transmission and additionally a serial transmission connector is a part of the adapter (202), to the pins of which data reception (506) and data transmission (507) lines are connected.

12. The adapter according to claim 11, **characterized in that** the power supply of the voltage levels converter (503) is connected via the electronic card (204) power supply contact or supplied to the adapter (202) from an external source.

13. The adapter according to claim 11, **characterized in that** the part of the adapter (202), inserted into the electronic card reader (170), is a printed circuit board, the dimensions of which equal the dimensions of an electronic card (204).
